# EUROPÄISCHE PATENTSCHRIFT

(11) **EP 2 690 314 B1**
(45) Veröffentlichungstag und Bekanntmachung des Hinweises auf die Patenterteilung: **01.03.2017**
(21) Anmeldenummer: 12178285.8
(22) Anmeldetag: 27.07.2012
(51) Int. Cl.: F16H 25/20, H01C 7/12, H02B 13/035, H01H 3/40

(54) **Spindelantrieb**
Spindle drive
Entraînement à broche

(43) Veröffentlichungstag der Anmeldung: 29.01.2014
(73) Patentinhaber: Siemens Aktiengesellschaft, 80333 München (DE)
(72) Erfinder: Springborn, Dirk, 12203 Berlin (DE); Pippert, Erhard, 14624 Dallgow-Döberritz OT Seeburg (DE); Sulitze, Markus, 14612 Falkensee (DE)

(56) Entgegenhaltungen:
- EP-A1- 1 569 254
- DE-A1- 3 733 781
- DE-A1-102008 059 163
- DE-C- 913 664
- NL-A- 6 509 656
- US-A- 4 064 981

## Beschreibung

Die Erfindung betrifft einen Spindelantrieb gemäß dem Oberbegriff des Patentanspruchs 1, sowie eine Komponente einer gasisolierten Schaltanlage gemäß Anspruch 4.

Gasisolierte Schaltanlagen weisen eine Vielzahl an verschiedenen Komponenten auf, die entweder einzeln oder gemeinsam mit anderen Komponenten in gasdichten Gehäusen gekapselt sind. Soll eine solche gasisolierte Schaltanlage getestet oder gewartet werden, müssen die elektrischen Verbindungen mancher Komponenten zu diesem Zweck von der Schaltanlage getrennt werden. Solche Komponenten können beispielsweise Messwandler oder Überspannungsableiter sein.

Um die elektrische Verbindung bei geschlossenem Gehäuse öffnen und schließen zu können, sind Spindelantriebe bekannt, bei denen von außerhalb des Gehäuses mit einer Handkurbel eine Spindel angetrieben wird, die gasdicht durch das Gehäuse geführt ist, und im Inneren des Gehäuses einen Antriebsstab bewegt, der den Kontakt einer Trennstelle öffnet oder schließt. Die Verbindung von Spindel und Antriebsstab erfolgt dabei beispielsweise durch Verkleben oder Verstiften. Dies hat die Nachteile, dass die Verbindung nicht mehr lösbar ist, dass mit Werkzeugen auf engem Raum hantiert werden muss, oder dass bei der Montage metallische Späne entstehen können.

Der vorliegenden Erfindung liegt daher die Aufgabe zugrunde, einen Spindelantrieb anzugeben, der auf begrenztem Raum leicht zu montieren ist, und der eine lösbare Verbindung zwischen Spindel und Antriebsstab aufweist.

Die Aufgabe wird mit einem Spindelantrieb gemäß Patentanspruch 1 gelöst.

Ein Spindelantrieb zur linearen Bewegung eines Antriebsstabes weist dabei eine Gewindespindel und eine mit dieser zusammenwirkenden Gewindemutter auf. Der Antriebsstab und die Gewindemutter sind mit einem Koppelblock verbunden, der eine Ausnehmung aufweist, in der die Gewindemutter angeordnet ist. Erfindungsgemäß sind der Koppelblock und die Gewindemutter derart von einer Arretierbohrung durchsetzt, dass ein in die Arretierbohrung eingeschobener Arretierbolzen die Gewindemutter in der Ausnehmung verdrehfest und verschiebefest arretiert. So könnten Arretierbolzen und Ausnehmung gleiche Durchmesser aufweisen und die Gewindemutter eine Ausnehmung aufweisen, die sich formschlüssig an den Schaft des Arretierbolzens anschmiegt. Ein solcher Spindelantrieb ist besonders einfach zu montieren, und gestattet eine Lösung der Verbindung, indem der Arretierbolzen entfernt wird.

In einer vorteilhaften Ausgestaltung der Erfindung ragt der Antriebsstab in eine Bohrung des Koppelblocks. Koppelblock und Antriebsstab sind derart von einer Arretierbohrung durchsetzt, dass ein in die Arretierbohrung eingeschobener Arretierbolzen den Antriebsstab in der Ausnehmung verdrehfest und verschiebefest arretiert. Der Antriebsstab ist dadurch in ähnlicher Weise mit dem Koppelblock verbunden, wie die Gewindemutter. Die dort genannten Vorteile gelten auch hier. Werden Bohrung und Arretierbolzen gleichartig ausgelegt, ist eine besonders einfache Herstellung beider Verbindungsarten möglich.

Vorzugsweise durchsetzt die Arretierbohrung den Koppelblock, die Gewindemutter und den Antriebsstab derart, dass ein in die Arretierbohrung eingeschobener Arretierbolzen sowohl die Gewindemutter als auch den Antriebsstab verdrehfest und verschiebefest arretiert. Hierdurch werden in besonders einfacher Weise Antriebsstab und Gewindemutter mit einem einzigen Arretierbolzen gemeinsam mit dem Koppelblock verbunden. Die Anzahl der benötigten Teile und der Montageaufwand sind dadurch minimiert.

In einer weiteren vorteilhaften Ausgestaltung der Erfindung weist eine Komponente für eine gasisolierte Schaltanlage ein gasdichtes Gehäuse auf, in welchem eine mittels einer bewegbaren Antriebsstange betätigbare Trennstelle angeordnet ist. Dabei ist die Antriebsstange mit einem erfindungsgemäßen Spindelantrieb wie oben beschrieben von außerhalb des Gehäuses bewegbar. Da sich der Spindelantrieb im Inneren des Gehäuses der Komponente befindet und dort auch montiert werden muss, wirkt sich die einfache, werkzeuglose und damit spanfreie Montage des Spindelantriebes besonders vorteilhaft auf die Zuverlässigkeit der Komponente aus, da bei der Montage entstehende Metallspäne zu Überschlägen und damit Fehlfunktionen der Komponente führen können.

Des Weiteren sieht eine vorteilhafte Ausgestaltung der Erfindung vor, dass die Komponente ein Überspannungsableiter oder ein Messwandler ist. Bei derartigen Komponenten sind die Platzverhältnisse, die zur Montage zur Verfügung stehen, oft beengt, so dass eine leichte Montage eines Spindelantriebes hier besonders vorteilhaft ist.

Im Folgenden wird die Erfindung anhand der Zeichnungen näher erläutert. Dabei zeigen:
Figur 1 zeigt den Einsatz eines gattungsgemäßen Spindelantriebes in einem Überspannungsableiter nach dem Stand der Technik,
Figur 2 einen erfindungsgemäßen Spindelantrieb in perspektivischer Darstellung,
Figur 3 die Einzelteile eines erfindungsgemäßen Spindelantriebes in perspektivischer Darstellung,
Figur 4 die Aufsicht auf einen Spindelantrieb nach Fig. 2
und
Figur 5 der Figur 4 entsprechende Frontansicht,
Figur 6 eine der Figur 5 entsprechende Ansicht einer alternativen Ausführungsform der Erfindung.

Einander entsprechende Teile sind in allen Figuren mit den gleichen Bezugszeichen versehen.

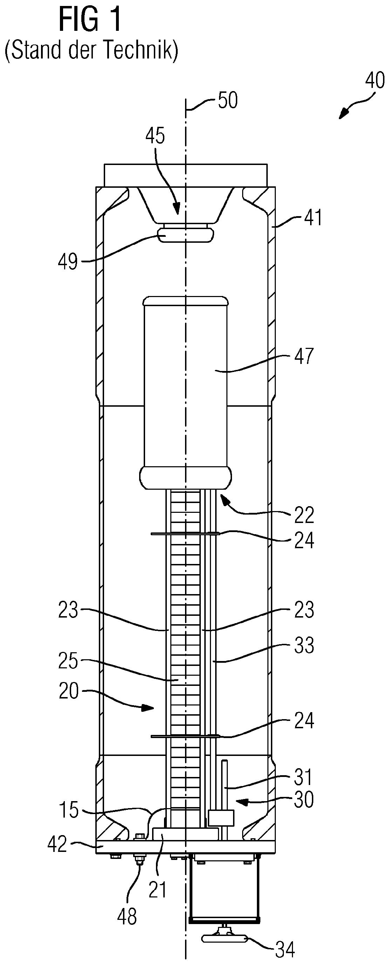

Die Figur 1 zeigt einen Überspannungsableiter 40 in Schnittdarstellung. In einem fluiddichten Gehäuse 41 ist ein Ableitelement 20 angeordnet. Dieses Ableitelement 20 weist eine zylindrische Varistorsäule 25, eine obere Endarmatur 22, eine untere Endarmatur 21 und mehrere Zugelemente 23 auf. An den beiden Enden der Varistorsäule 25 sitzen Endarmaturen 21, von denen in der Fig. 1 nur die untere Endarmatur 21 sichtbar ist. Zugelemente 23 sind in den Endarmaturen 21 unter Zug verpresst und halten so die Varistorsäule 25 zusammen. In die Varistorsäule 25 sind Haltescheiben 24 eingefügt, die Löcher aufweisen, durch die die Zugelemente 23 geführt sind und so das Ableitelement 20 zusätzlich stabilisieren.

Das Gehäuse 41 ist im Wesentlichen zylinderförmig. Entlang der Zylinderachse erstreckt sich die Längsachse 50. Das Ableitelement 20 ist entlang dieser Längsachse 50 ausgerichtet. An den beiden Deckflächen ist das Gehäuse 41 fluiddicht verschlossen.

Auf einer Erdanschlusseite des Ableitelementes 20 ist die Deckfläche des Gehäuses 41 mit einem einfachen Gehäusedeckel 42 verschlossen. Ein Erdkontakt 48 ist elektrisch isoliert durch diesen Gehäusedeckel 42 vom Inneren zum Äußeren des Gehäuses 41 geführt und dient dem Erdungsanschluss. Im Inneren des Gehäuses 41 ist dieser Erdkontakt 48 elektrisch leitend mit dem Ableitelement 20 beispielsweise mit einem Kabel 15 verbunden.

Auf einer Hochspannungsanschlussseite des Ableitelementes 20 ist die Deckfläche des Gehäuses 41 mit einer Hochspannungsdurchführung 45 versehen, um das elektrische Hochspannungspotential ohne Gefahr eines Überschlags zwischen Hochspannung und geerdetem Gehäuse 41 von außen in das Gehäuse 41 hinein zu führen. Im Inneren des Gehäuses 41 weist die Hochspannungsdurchführung 45 einen Kontakt 49 auf.

Ein Gegenkontakt 47, der elektrisch mit dem hochspannungsseitigen Ende des Ableitelementes 20 verbunden ist, ist mit einem Antrieb 30 verbunden, der eine fluiddicht durch den Gehäusedeckel 42 geführte Spindel 31 aufweist und mit einer außerhalb des Gehäuses 41 mit dieser Spindel 31 verbundenen Handkurbel 34 angetrieben wird.

Über die Handkurbel 34 kann die Spindel 31 in eine rotierende Bewegung versetzt werden. Über den Antrieb 30 wird diese Rotationsbewegung in eine lineare Bewegung der Antriebsstange 33 in Richtung der Längsachse 50 umgesetzt. Die Antriebsstange 33 wiederum überträgt diese lineare Bewegung auf den Gegenkontakt 47. Zur besseren Führung der Antriebsstange 33 ist diese durch Löcher in den Haltescheiben 24 geführt. Der Gegenkontakt 47 kann somit in Richtung der Längsachse 50 zum Kontakt 49 hin und von diesem weg bewegt werden, und so eine elektrische Verbindung hergestellt beziehungsweise unterbrochen werden. In der Darstellung in Fig. 1 ist die elektrische Verbindung unterbrochen.

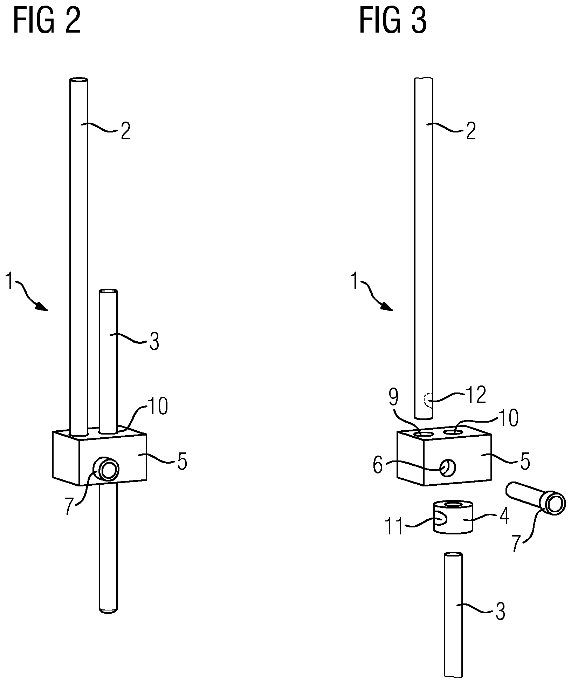

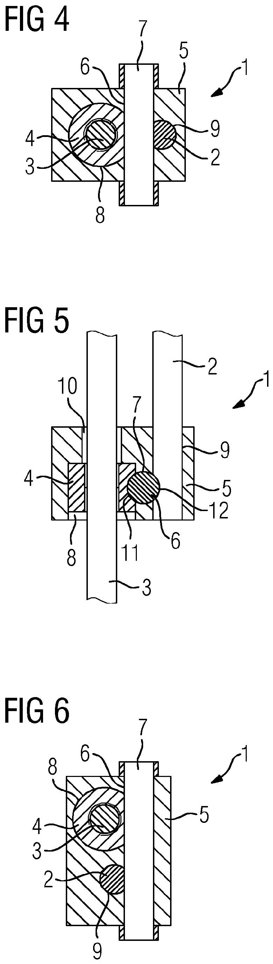

Die Figur 2 zeigt einen erfindungsgemäßen Spindelantrieb 1 in zusammengebauter Form, Figur 3 eine entsprechende Explosionsdarstellung. Die Figuren 4 und 5 zeigen andere Ansichten des in Figur 2 gezeigten Spindelantriebes 1. Der gezeigte Spindelantrieb 1 weist eine Gewindespindel 3 auf, die beispielsweise von einer Handkurbel, wie in Figur 1 gezeigt, in Rotation versetzt wird. Mit der Gewindespindel 3 wirkt eine entsprechende Gewindemutter 4 zusammen. Dabei weist die Gewindemutter 4 ein Innengewinde auf und die Gewindespindel 3 ein entsprechendes Außengewinde, beispielsweise ein Trapezgewinde. Wird die Gewindespindel 3 gedreht und die Gewindemutter 4 daran gehindert, sich mit der Gewindespindel 3 mitzudrehen, so wird die Gewindemutter 4 an der Gewindespindel 3 entlang bewegt. Die Richtung der Bewegung wird durch den Drehsinn der Gewindespindel 3 bestimmt. Somit wird durch den Spindelantrieb 1 eine Drehbewegung der Gewindespindel 3 in eine lineare Bewegung der Gewindemutter 4 umgesetzt.

Zur Übertragung der linearen Bewegung auf den Antriebsstab 2 verbindet ein Koppelblock 5 Gewindemutter 4 und Antriebsstab 2. Der Koppelblock 5 weist dazu drei Bohrungen 9, 10, 6 auf. In die Bohrung 9 ragt der Antriebsstab 2 mit einem Ende. Durch eine parallel zu dieser Bohrung 9 verlaufenden Spindelbohrung 10, die den Koppelblock 5 vollständig durchdringt, verläuft die Gewindespindel 3. Die Spindelbohrung 10 weist an einer ihrer Öffnungen eine koaxiale Ausnehmung 8 auf, in die die Gewindemutter 4 eingeschoben werden kann. Eine Arretierbohrung 6 verläuft quer zu Bohrung 9 und Spindelbohrung 10 durch den Koppelblock 5. Dabei schneidet die Arretierbohrung 6 sowohl die Ausnehmung 8, als auch die Bohrung 9. Alternativ wären zwei zueinander parallele Arretierbohrungen 6 denkbar, von denen eine die Ausnehmung 8 schneidet, die andere die Bohrung 9. In der gezeigten Ausführungsform liegt die Arretierbohrung 6 zwischen der Spindelbohrung 10 mit der Ausnehmung 8 und der Bohrung 9, so dass sich die Schnittflächen von Ausnehmung 8 und Bohrung 9 mit der Arretierbohrung 6 bezogen auf die Arretierbohrung 6 gegenüberliegen. Alternativ ist es möglich, die Spindelbohrung 9 mit der Ausnehmung 8 und die Bohrung 9 hintereinander auf einer Seite der Arretierbohrung 6 anzuordnen. Eine der Figur 5 entsprechende Ansicht dieser Ausführungsform zeigt die Figur 6.

Die Gewindemutter 4 weist eine Ausnehmung 11 auf. Diese ist auf der Mantelfläche der Gewindemutter derart angeordnet, dass die Gewindemutter 4 so in die Ausnehmung 8 einschiebbar ist, dass die Ausnehmung 11 im Schnittbereich der Ausnehmung 8 mit der Arretierbohrung 6 liegt. Wird ein Arretierbolzen 7 in die Arretierbohrung 6 eingeschoben, so wird die Gewindemutter 4 dadurch formschlüssig verdrehfest und verschiebefest in der Ausnehmung 8 arretiert. Dasselbe Verriegelungsprinzip kommt auch bei dem Antriebsstab 2 zur Anwendung. Dieser weist an dem Teil seiner Mantelfläche, der in die Bohrung 9 eingeschoben wird, ebenfalls eine Ausnehmung 12 auf. Diese ist so angeordnet, dass der Antriebsstab derart in die Bohrung 9 einschiebbar ist, dass die Ausnehmung 12 im Schnittbereich von Bohrung 9 und Arretierbohrung 6 liegt. Wird der Arretierbolzen 7 in die Arretierbohrung 6 eingeschoben, so wird der Antriebsstab 2 dadurch verdrehfest und verschiebefest in der Bohrung 9 arretiert. Für Gewindemutter 4 und Antriebsstab 2 können dabei jeweils eigene Arretierbohrungen 6 und Arretierbolzen 7 vorgesehen sein, oder - wie in den Figuren 2 bis 6 gezeigt - kann ein Arretierbolzen 7 in einer Arretierbohrung 6 sowohl Gewindemutter 4, als auch Antriebsstab 2 arretieren.

Alle Bohrungen 6, 9 und 10 sowie alle Ausnehmungen 8, 11, 12 sind mit einfachen Werkzeugen wie Bohrern und Rundfräsen herstellbar. Ein Zusammenbau des Spindelantriebes 1 ist werkzeuglos möglich. Zunächst wird die Gewindemutter 4 auf die Gewindespindel 3 aufgeschraubt und auf die gewünschte Höhe gebracht. Dann wird der Koppelblock 5 mit der Spindelbohrung 10 auf die Gewindespindel 3 aufgefädelt und entlang der Gewindespindel 3 verschoben, bis die Gewindemutter 4 in der Ausnehmung 8 sitzt. Dann wird ein Ende des Antriebsstabes 2 in die Bohrung 9 gesteckt. Antriebsstab 2 und Gewindemutter 4 werden nun so ausgerichtet, dass ihre Ausnehmungen 11, 12 in der Öffnung der Arretierbohrung 6 liegen. Nun wird der Arretierbolzen 7 in die Arretierbohrung 6 eingeschoben und damit Gewindemutter 4 und Antriebsstab 2 arretiert. Der Arretierbolzen 7 kann an einem Ende einen Bolzenkopf als Tiefenanschlag aufweisen und am anderen Ende aus der Arretierbohrung 6 heraus stehen und durch Haltemittel wie Splinte, Sicherungsclipse oder Kabelbinder gegen Herausrutschen gesichert werden. Der Bolzenkopf dient gleichzeitig als Griff zum einfachen Lösen der Verbindung.

## Patentansprüche

1. Spindelantrieb (1) zur linearen Bewegung eines Antriebsstabes (2) umfassend eine Gewindespindel (3), eine mit dieser zusammenwirkenden Gewindemutter (4) und einem mit dem Antriebsstab (2) und der Gewindemutter (4) verbundenen Koppelblock (5) mit einer Ausnehmung (8), in der die Gewindemutter (4) angeordnet ist,
**dadurch gekennzeichnet,**
**dass** der Koppelblock (5) und die Gewindemutter (4) derart von einer Arretierbohrung (6) durchsetzt sind, dass ein in die Arretierbohrung (6) eingeschobener Arretierbolzen (7) die Gewindemutter (4) in der Ausnehmung (8) verdrehfest und verschiebefest arretiert.

2. Spindelantrieb (1) nach Anspruch 1,
**dadurch gekennzeichnet,**
**dass** der Antriebsstab (2) in eine Bohrung (9) des Koppelblockes (5) ragt und dass der Koppelblock (5) und der Antriebsstab (2) derart von einer Arretierbohrung (6) durchsetzt sind, dass ein in die Arretierbohrung (6) eingeschobener Arretierbolzen (7) den Antriebsstab (2) in der Bohrung (9) verdrehfest und verschiebefest arretiert.

3. Spindelantrieb (1) nach einem der Ansprüche 1 oder 2,
**dadurch gekennzeichnet,**
**dass** die Arretierbohrung (6) den Koppelblock (5), die Gewindemutter (4) und den Antriebsstab (2) derart durchsetzt, dass ein in die Arretierbohrung (6) eingeschobener Arretierbolzen (7) sowohl die Gewindemutter (4) als auch den Antriebsstab (2) verdrehfest und verschiebefest arretiert.

4. Komponente für eine gasisolierte Schaltanlage mit einem gasdichten Gehäuse in welchem eine mittels einer bewegbaren Antriebsstange (2) betätigbare Trennstelle angeordnet ist, wobei die Antriebsstange (2) mit einem Spindelantrieb (1) nach den Ansprüchen 1 bis 3 von außerhalb des Gehäuses bewegbar ist.

5. Komponente nach Anspruch 4, **dadurch gekennzeichnet, dass** die Komponente ein Überspannungsableiter oder ein Messwandler ist.

## Claims

1. Spindle drive (1) for linearly moving a drive rod (2), comprising a threaded spindle (3), a threaded nut (4) interacting with the latter, and a coupling block (5), connected to the drive rod (2) and the threaded nut (4), having a cutout (8) in which the threaded nut (4) is arranged,
**characterized**
**in that** the coupling block (5) and the threaded nut (4) are passed through by a locking bore (6) such that a locking bolt (7) inserted into the locking bore (6) locks the threaded nut (4) in the cutout (8) in a non-rotatable and non-displaceable manner.

2. Spindle drive (1) according to Claim 1,
**characterized**
**in that** the drive rod (2) projects into a bore (9) in the coupling block (5), and in that the coupling block (5) and the drive rod (2) are passed through by a locking bore (6) such that a locking bolt (7) inserted into the locking bore (6) locks the drive rod (2) in the bore (9) in a non-rotatable and non-displaceable manner.

3. Spindle drive (1) according to either of Claims 1 and 2,
**characterized**
**in that** the locking bore (6) passes through the coupling block (5), the threaded nut (4) and the drive rod (2) such that a locking bolt (7) inserted into the locking bore (6) locks both the threaded nut (4) and the drive rod (2) in a non-rotatable and non-displaceable manner.

4. Component for a gas-insulated switchgear assembly having a gastight housing in which a disconnection point that is actuable by means of a movable drive rod (2) is arranged, wherein the drive rod (2) is movable from outside the housing by way of a spindle drive (1) according to Claims 1 to 3.

5. Component according to Claim 4, **characterized in that** the component is a surge arrester or a transducer.

## Revendications

1. Entraînement ( 1 ) à broche pour le déplacement linéaire d'une barre ( 2 ) d'entraînement comprenant une broche ( 3 ) filetée, un écrou ( 4 ) coopérant avec celle-ci et un bloc ( 5 ) d'accouplement relié à la barre ( 2 ) d'entraînement et à l'écrou ( 4 ) et ayant un évidement ( 8 ) dans lequel l'écrou ( 4 ) est disposé,
**caractérisé**
**en ce que** le bloc ( 5 ) d'accouplement et l'écrou ( 4 ) sont traversés par un trou ( 6 ) de blocage de manière à ce qu'un axe ( 7 ) de blocage, inséré dans le trou ( 6 ) de blocage, bloque l'écrou ( 4 ) dans l'évidement ( 8 ) sans possibilité de rotation ni de coulissement.

2. Entraînement ( 1 ) à broche suivant la revendication 1,
**caractérisé**
**en ce que** la barre ( 2 ) d'entraînement pénètre dans un trou ( 9 ) du bloc ( 5 ) d'accouplement et en ce que le bloc ( 5 ) d'accouplement et la barre ( 2 ) d'entraînement sont traversés par un trou ( 6 ) de blocage de manière à ce qu'un axe ( 7 ) de blocage, inséré dans le trou ( 6 ) de blocage, bloque la barre ( 2 ) d'entraînement dans le trou ( 9 ) sans possibilité de rotation ni de coulissement.

3. Entraînement ( 1 ) suivant l'une des revendications 1 ou 2,
**caractérisé**
**en ce que** le trou ( 6 ) de blocage traverse le bloc ( 5 ) d'accouplement, le trou ( 4 ) et la barre ( 2 ) d'entraînement de manière à ce qu'un axe ( 7 ) de blocage, inséré dans le trou ( 6 ) de blocage, bloque à la fois l'écrou ( 4 ) et la barre (2) d'entraînement sans possibilité de rotation ni de coulissement

4. Composant d'une installation de distribution isolée par du gaz ayant un boîtier étanche au gaz, dans lequel est disposé un point de sectionnement pouvant être actionné au moyen d'une barre ( 2 ) d'entraînement mobile, la barre ( 2 ) d'entraînement pouvant être déplacée vers l'extérieur du boîtier par un entraînement ( 1 ) à broche suivant les revendications 1 à 3.

5. Composant suivant la revendication 4, **caractérisé en ce que** le composant est un parafoudre ou un transducteur de mesure.
